# EUROPÄISCHE PATENTANMELDUNG

(11) **EP 4 390 119 A1**
(43) Veröffentlichungstag der Anmeldung: **26.06.2024**
(21) Anmeldenummer: 22214873.6
(22) Anmeldetag: 20.12.2022
(51) Int. Cl.: F03D 15/00, F16H 57/08, F16H 57/04, F16C 17/10, F16C 17/26, F03D 80/70, F16C 21/00

(54) **PLANETENGETRIEBE SOWIE ANTRIEBSSTRANG UND WINDKRAFTANLAGE MIT EINEM ENTSPRECHENDEN PLANETENGETRIEBE**

(71) Anmelder: Flender GmbH, 46395 Bocholt (DE)
(72) Erfinder: Hambrecht, Ralf, 46395 Bocholt (DE)
(74) Vertreter: Michalski Hüttermann & Partner Patentanwälte mbB

(57) **Zusammenfassung**

Die Erfindung betrifft ein Planetengetriebe 10 für eine über einen Rotor 106 angetriebene Windkraftanlage 100 mit zumindest einer in einem Getriebegehäuse 12 um eine Drehachse A_{D} umlaufenden Planetenstufe 14, wobei die zumindest eine Planetenstufe 14 einen Planetenträger 16 und ein Hohlrad 20 aufweist und der Planetenträger 16 oder das Hohlrad 20 zumindest mittelbar mit dem Rotor 106 antriebsverbunden ist und wobei der Planetenträger 16 mehrere in dem Planetenträger 16 umlaufend und radial gleitgelagerte und wechselseitig mit einem dem Hohlrad 20 und einem Sonnenrad 22 in einem Verzahnungseingriff stehende Planetenrädern 18 aufweist. Es sind Führungselemente 24 zwischen dem Getriebegehäuse 12 und dem Planetenträger 16 vorgesehen. Durch die Führungselemente 24 wird die Selbstzentrierung der verzahnten Elemente, d.h. Planetenräder 18 und Sonnenrad 22, in der Planetenstufe 14 gezielt zugelassen und gewichtsentlastend unterstützt.

## Beschreibung

Die Erfindung betrifft ein Planetengetriebe für eine über einen Rotor angetriebene Windkraftanlage mit zumindest einer in einem Getriebegehäuse um eine Drehachse A_{D} umlaufenden Planetenstufe, wobei die zumindest eine Planetenstufe einen Planetenträger und ein Hohlrad aufweist und der Planetenträger oder das Hohlrad zumindest mittelbar mit dem Rotor antriebsverbunden ist und wobei der Planetenträger mehrere mit dem Planetenträger umlaufend und wechselseitig mit einem dem Hohlrad und einem Sonnenrad in einem Verzahnungseingriff stehende Planetenrädern aufweist.

Planetenträger in Planetengetrieben für Windkraft- oder Industrieanwendungen werden üblicherweise mit Wälzlagern in einem Getriebegehäuse gelagert. Die Lagerung erfolgt üblicherweise mit Zylinderrollenlagern, Momentenlager oder Kegelrollenlagern. Diese weisen jeweils einen Innen- und Außenring auf. Insbesondere Außenringe unterliegen einer erhöhten Ringwandergefahr und werden gegen Verdrehen z.B. formschlüssig gesichert. In neueren integrierten Antriebsstrangkonzepten übernimmt z.T. die Antriebswellenlagerung die Führung des ersten Planetenträgers. Die Lagerung des Planetenträgers in dem Getriebegehäuse ist dann in dem Bereich angeordnet, in dem der Planetenträger mit der Antriebswelle verbunden ist oder in dem Bereich, in dem der Planetenträger abtriebsseitig mit einer Ausgangswelle verbunden ist. Beiden konstruktiven Ausgestaltungen ist gemeinsam, dass die Lagerung des Planetenträgers im Bereich eines kleineren Durchmessers erfolgt, verglichen mit dem Außendurchmesser des Planetenträgeraußendurchmesser. Das hat zur Folge, dass die Stützstruktur des Getriebegehäuses, zum Beispiel Stege oder Flansche, zur Aufnahme der Lagerungskräfte nach innen auf den kleinen Durchmesser der Lagerung gezogen werden muss. Dadurch muss mehr Material eingesetzt werden und es wird mehr axialer Bauraum für die Lagerung des Planetenträgers im Getriebegehäuse benötigt.

Die eingesetzten Wälzlager weisen in der Regel hohe Steifigkeiten auf und positionieren den Planetenträger während eines Betriebs in einer Ist-Position, die nicht unbedingt der Soll-Position entspricht, die sich aus dem Gleichgewicht der Verzahnungskräfte, beispielsweise bei Nennlast, einstellen würde. Durch die Abweichung von Ist-Position zu Soll-Position entstehen zusätzliche Zwangskräfte auf die Lagerungen und in der Planetenstufe. Die eingesetzten Wälzlager sind baulich gesehen groß und beeinflussen maßgeblich die Gesamtkosten des Getriebes. Bei hohen Leistungen bzw. Antriebsmomenten die Welle-Nabe-Verbindungen zwischen Antriebswelle und Planetenträger müssten größere Anschlussdurchmesser gewählt werden, was wiederum größere Lagerdurchmesser für die Lagerung des Planetenträgers erfordert. Es besteht ein ständiges Bedürfnis die Lagerung des Planetenträgers derart weiterzubilden, dass höhere Leistungen bzw. Antriebsmomente übertragen werden können.

Es ist die Aufgabe der Erfindung Maßnahmen aufzuzeigen, die eine verbesserte Lagerung des Planetenträgers bei hohen Leistungen bzw. Antriebsmomenten ermöglichen.

Die Lösung der Aufgabe erfolgt durch ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Planetengetriebe für eine über einen Rotor angetriebene Windkraftanlage mit zumindest einer in einem Getriebegehäuse um eine Drehachse A_{D} umlaufenden Planetenstufe, wobei die zumindest eine Planetenstufe einen Planetenträger und ein Hohlrad aufweist und der Planetenträger oder das Hohlrad zumindest mittelbar mit dem Rotor antriebsverbunden ist und wobei der Planetenträger mehrere mit dem Planetenträger umlaufend und wechselseitig mit einem dem Hohlrad und einem Sonnenrad in einem Verzahnungseingriff stehende Planetenrädern aufweist und wobei eine Mehrzahl an Führungselementen vorgesehen sind, die umfänglich bezogen auf die Drehachse A_{D} angeordnet sind und die jeweils wechselseitig in einer Wirkverbindung mit dem Getriebegehäuse und einem Umfangsbereich des Planetenträgers steht.

Das Planetengetriebe kann eine oder mehrere Planetenstufen umfassen. Die jeweils letzte Planetenstufe kann mittelbar oder unmittelbar einen Generator antreiben. Bei einem mittelbaren Antrieb kann eine zwischengeschaltete Stirnradstufe vorgesehen sein. Der Planetenträger kann korbartig aufgeführt sein, wobei der Planetenträger über eine geeignete Wälzlageranordnung drehbar gegenüber einem Gehäuse bzw. einem Gehäuseteil um die Drehachse A_{D} gelagert ist. Die Drehachse A_{D} legt vorliegend die Axialrichtung fest, so dass sich aus dieser Axialrichtung die jeweiligen Radialrichtungen ergeben.

Die Planetenräder sind über Planetenachsen an dem Planetenträger gehalten. Die Planetenachsen laufen parallel und versetzt zu der Drehachse A_{D}. Die Planetenräder werden zu beiden axialen Seiten jeweils von einer Seitenwange des Planetenträgers eingefasst. Die Planetenträger sind in eine radiale Richtung nach innen und eine radiale Richtung nach außen von dem Planetenträger bzw. den Seitenwangen freigestellt und stehen in jeweiligem Verzahnungseingriff mit einem Hohlrad und einem Sonnenrad bzw. einer Sonnenradwelle.

Die Führungselemente können entweder umfänglich gleichmäßig beabstandet sein oder umfänglich derart angeordnet sein, dass einzelne Führungselement zu dem einen benachbarten Führungselement einen anderen umfänglichen Abstand haben, als zu dem jeweils anderen benachbarten Führungselement. Die Führungselemente können entweder an dem Getriebegehäuse drehfest gehalten sein oder an dem Planetenträger mit diesem umlaufend gehalten sein. Wenn die Führungselemente an dem Getriebegehäuse befestigt sind, dann entsteht während des Betriebes eine Relativbewegung zwischen den Führungselementen einerseits und dem Planetenträger andererseits. Wenn die Führungselemente an dem Planetenträger befestigt sind, dann entsteht während des Betriebes eine Relativbewegung zwischen den Führungselementen einerseits und dem Getriebegehäuse andererseits.

Die Führungselemente können, je nach Ausführung, mit dem Planetenträger oder dem Getriebegehäuse über Gleitreibung oder über Rollreibung in Wirkverbindung stehen. Die mehreren Führungselemente können untereinander unterschiedlich ausgeführt sein. Es kann beispielsweise vorgesehen sein, dass grundsätzlich zwei in ihrer Funktion anders wirkende Typen von Führungselementen zur Anwendung kommen. Unter Wirkverbindung soll ein irgendwie geartetes Einwirken der Führungselemente auf den Planetenträger oder das Getriebegehäuse, je nachdem wo die Führungselemente befestigt sind, verstanden werden. Zweckmäßigerweise besteht dieses Einwirken in einem radialen oder axialen Führen des Planetenträgers innerhalb des Getriebegehäuses.

Bei dem ersten Funktionstyp der Führungselemente ist vorgesehen, dass diese jeweils im Wesentlichen in einer radialen Richtung auf den Planetenträger wirken. Dieser erste Funktionstyp der Führungselemente kompensiert weitestgehend die Gewichtskraft des Planetenträgers und die in diesem einsitzenden Planetenräder und das Sonnenrad. Hierbei ist es allerdings nicht zwingend erforderlich, dass die Führungselemente den Planetenträger auf einer exakt definierten Position halten, sondern kann als ausreichend erachtet werden, wenn sich die Position des Planetenträgers in einer definierten Bandbreite befindet.

Bei dem zweiten Funktionstyp der Führungselemente ist vorgesehen, dass hierbei diese einstellbar sind und jeweils Bewegungsgrenzen vorgeben, innerhalb der sich der Planetenträger und zwar bevorzugt nachdem die Gewichtskraft des Planetenträgers mit den Planetenrädern und dem Sonnenrad durch den ersten Funktionstyp der Führungselemente kompensiert wurde.

Durch die Führungselemente wird die Selbstzentrierung der verzahnten Elemente, d.h. Planetenräder und Sonnenrad, in der Planetenstufe gezielt zugelassen und gewichtsentlastend unterstützt. Es entstehen damit keine Zwangskräfte aus der Überbestimmung während des Betriebes unter Last, die bei den bisher genutzten Wälzlagerungen entstehen. Dadurch kann auch das Risiko des analytisch nicht vollständig vorhersehbares Ringwanderns komplett eliminiert werden, so dass eine vorzeitige Reparatur oder gar der komplette Ausfall der Planetenstufe oder des gesamten Getriebes vermieden werden kann.

In einer bevorzugten Ausgestaltung des Planetengetriebes ist der mit den Führungselementen in Wechselwirkung stehende Umfangsbereich in einem äußeren Drittel eines Radius des Planetenträgers angeordnet. Hierdurch ist gewährleistet, dass infolge der Hebelwirkung über die Führungselemente ausreichend große Führungs- und/oder Stützkräfte aufgebracht werden können.

In einer bevorzugten Ausgestaltung des Planetengetriebes sind zumindest drei über den Umfang verteilte Führungselemente vorgesehen. Hierbei kann insbesondere vorgesehen sein, dass die Führungselemente entsprechend dem beschriebenen zweiten Funktionstyp ausgeführt sind. Hierbei kann in konkreter Ausgestaltung vorgesehen sein, dass zwei der Führungselemente in einem Bereich des unteren Halbumfangs des Planetenträgers angeordnet sind.

In einer bevorzugten Ausgestaltung des Planetengetriebes führen die Führungselemente den Planetenträger gegenüber dem Getriebegehäuse in axialer und in radialer Richtung. Hier kann in einer konkreten Ausgestaltung vorgesehen sein, dass zumindest eines der Führungselemente den Planetenträger an einer axialen Seite, bevorzugt an beiden axialen Seiten, in radialer Richtung umgreift.

In einer bevorzugten Ausgestaltung des Planetengetriebes sind die Führungselemente jeweils mehrteilig aufgebaut sind, wobei jeweils eine Führungsbacke auf jeder axialen Seite des Planetenträgers angeordnet ist. Insbesondere kann in vorteilhafter Weise vorgesehen sein, dass die Führungsbacken mehrteilig, bevorzugt zweiteilig, aufgebaut sind, wobei ein erstes Backenteil eine Außenumfangsfläche des Planetenträgers und ein zweites Backenteil eine axiale Seitenfläche des Planetenträgers zur jeweiligen Führung beaufschlagt. Das erste Backenteil kann in einer möglichen Variante eine drehbar gelagerte Führungsrolle umfassen.

In einer weitergehenden und bevorzugten Ausgestaltung bildet das erste Backenteil zumindest einen im Wesentlichen radial verlaufenden Ölkanal aus. Ein Ölkanal kann über Bohrungen oder Nuten realisiert sein, die in das erste Backenteil, in dem jeweiligen Führungselemente, dem Planetenträger und/oder der Tragstruktur des Getriebegehäuses eingearbeitet sind. Über den zumindest einen Ölkanal kann Schmierstoff von der stationären Tragstruktur auf die rotierenden Teile des Planetenträgers geleitet werden. Der Schmierstoff dient zur Schmierung und Temperierung der tribologischen Kontakte der Führungselemente an sich aber auch der Schmierung Planetenstufe und der angrenzenden Bauteile.

In einer bevorzugten Ausgestaltung des Planetengetriebes sitzt zumindest eines der Führungselemente in radialer Richtung vorgespannt zwischen dem Getriebegehäuse und dem Planetenträger ein. In vorteilhafter Weise kann bei dem zweiten Funktionstyp der Führungselemente ein zusätzliches, einstellbares Element vorgesehen sein, wobei das zusätzliche Element bevorzugt an einer stationäres Stützstruktur angeordnet ist. Das zusätzliche Element ist mit einer Kraft-Weg- und Beschleunigungssensorik ausgestattet und wird mit einer definierten Kraft auf die im Betrieb rotierende und mit Getriebeöl geschmierte Gegenfläche beaufschlagt. Bei der Gegenfläche handelt es sich zweckmäßigerweise um eine Umfangsfläche des Planetenträgers. Neben der bekannten Anpresskraft wird auch die senkrecht zur Anpresskraft auftretende Reibkraft, z.B. in Form einer Biegungbeanspruchungsmessung des Führungselements erfasst. Über die Auswertung der Kraft-Weg-Sensorik in Kombination mit einer Differenzdrehzahlmessung zwischen Stützstruktur und Planetenträger, kann eine Beurteilung des Schmierstoffzustandes sowie des allgemeinen Schmierungs- und Verschleißzustandes der mechanischen Komponenten getroffen werden können. Die Beschleunigungssensorik soll besonders auch den Bereich der sogenannten Accoustic Emission im Frequenzbereich zwischen 20 KHz bis 1 MHz abdecken, um auch reibungsinduzierte Schwingungsanregungen und damit erste, möglicherweise verschleißbildende, Kontakte der Rauigkeitsspitzen detektieren zu können. Mit dieser Zusatzfunktion in einem Führungselement kann der alterungsabhängige Schmierstoffzustand ermittelt werden und eine Vorhersage des Schmierstoffwechselintervalls bzw. der Resteinsatzdauer bestimmt werden.

Die Aufgabe wird zudem gelöst durch einen Antriebsstrang für eine Windkraftanlage zur drehmomentübertragenden Verbindung eines Rotors mit einem Generator, umfassend eine Hauptlagereinheit mit einem Lagergehäuse und einer Hauptwelle und ein über die Hauptwelle angetriebenes Getriebe, wobei das Getriebe den Generator zumindest mittelbar antreibt, dadurch gekennzeichnet, dass das Getriebe als Planetengetriebe nach einem der oben beschriebenen Ausführungsformen ausgebildet ist.

Gleichermaßen wird die Aufgabenstellung gelöst durch eine Windkraftanlage, mit einem Rotorflansch mit einem Mehrblattrotor und einem Generator, wobei ein an einem Träger drehbar gehaltener und den Rotorflansch mit dem Generator verbindender Antriebsstrang vorgesehen ist und der Antriebsstrang wie zuvor beschrieben ausgebildet ist.

Die Lösung der zugrundeliegende Aufgabenstellung erfolgt zudem durch ein Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher in einem wie vorstehend beschriebenen Planetengetriebe vorgesehenen Bestandteile, wobei die Datenpakete dazu hergerichtet sind bei einer Verarbeitung durch eine Datenverarbeitungseinrichtung eine additive Herstellung der Bestandteile des Planetengetriebes, insbesondere durch 3D-Druck mittels eines 3D-Druckers, und/oder eine Simulation der Funktionsweise des Planetengetriebes durchzuführen. Dies ermöglicht eine kostengünstige Herstellung von Prototypen und/oder computerbasierten Simulationen, um die Funktionsweise des Planetengetriebes zu studieren, Probleme im konkreten Anwendungsfall zu identifizieren und Verbesserungen zu finden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage in einer möglichen Ausführung,
Fig. 2: einen Querschnitt durch das Getriebe mit zwei Planetenstufen,
Fig. 3: eine Axialansicht der ersten Planetenstufe mit Führungselementen,
Fig. 4: eine Detaillierung eines Führungselements,
Fig. 5: eine Axialansicht der ersten Planetenstufe mit Führungselementen in weiteren Ausführungen und
Fig. 6, 7a), 7b): weitere Detaillierungen der Planetenstufe im Bereich der Führungselemente.

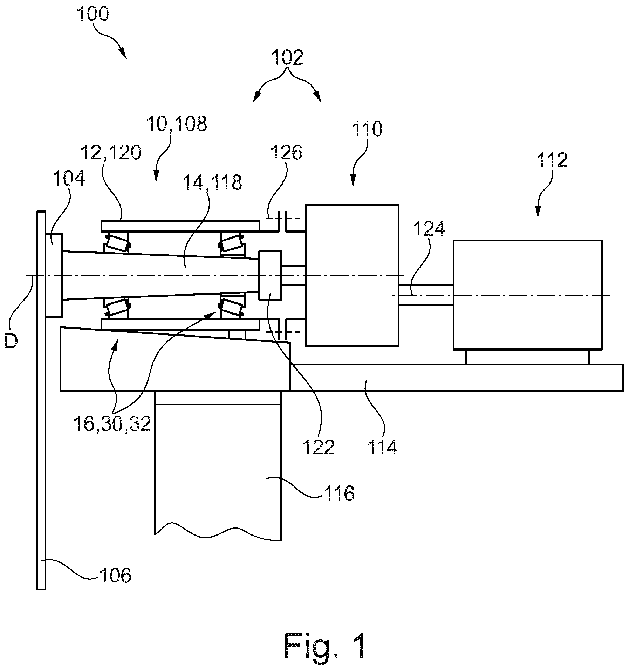

Die Figur 1 zeigt in schematischer und nicht maßstabsgetreuer Darstellung eine Windkraftanlage 100 in einer möglichen Ausführung. Wesentliches Element der Windkraftanlage 100 ist ein Antriebstrang 102, der vorliegend strukturell einen Rotorflansch 104 mit einem Rotor 106, eine Hauptlagereinheit 108, ein Getriebe 110 und einen Generator 112 umfasst. Über einen Maschinenträger 114 werden zumindest die Hauptlagereinheit 108 und der Generator 112 über einen Turm 116 gegenüber dem, nicht dargestellten, Boden abgestützt.

Die Hauptlagereinheit 108 umfasst eine Hauptwelle 118, die über eine Wälzlageranordnung 16 gegenüber einem Lagergehäuse 120 der Hauptlagereinheit 108 drehbar um eine Drehachse D gelagert ist. An einem Ende der Hauptwelle 118 ist der Rotorflansch 104 und an diesem der Rotor 106 gehalten. Das andere Ende der Hauptwelle 118 ist über eine Kupplung 122 antriebsmäßig mit dem Getriebe 110 verbunden, um ein von dem Rotor 106 aufgebrachtes Antriebsmoment in das Getriebe 110 einzuleiten. Das Getriebe 110 kann als Planetengetriebe mit einer oder mehreren Planetenstufen ausgeführt sein. Das Getriebe 110 ist über eine Generatorwelle 124 antriebsmäßig mit dem Generator 112 verbunden. Über einen Flansch 126 ist das Lagergehäuse 120 mit dem Getriebe 110 verbunden. Ein Reaktionsmoment des Getriebes 110 ist über den Flansch 126 gegenüber dem Rotorlagergehäuse und darüber zum Maschinenträger 114 abgestützt.

Bei der in der Figur 1 gezeigten Ausführung der Windkraftanlage 100 ist das Getriebegehäuse 12 über den Flansch 126 im Wesentlichen starr an das Lagergehäuse 120 angebunden. Im Gegensatz hierzu ist die Getriebeeingangswelle, z.B. ein Planetenträger, über die Kupplung 122 flexibel an die Hauptwelle 118 angebunden. In einer alternativen Ausführung der Windkraftanlage 100, die allerdings nicht gezeigt ist, ist das Getriebegehäuse 12 flexibel an das Lagergehäuse 120 angebunden und die Getriebeeingangswelle, auch hier z.B. ein Planetenträger, im Wesentlichen starr an die Hauptwelle 118 angebunden.

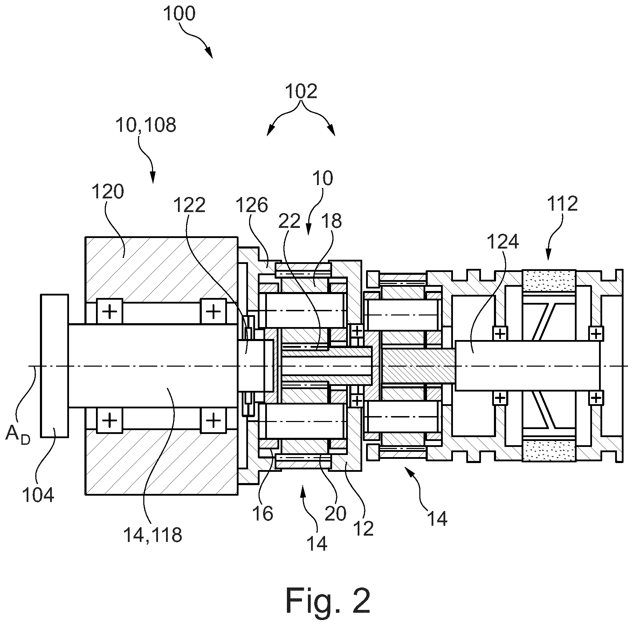

Die Figur 2 zeigt einen Querschnitt durch das Getriebe 110, das vorliegend mit zwei Planetenstufen 14 ausgeführt ist. Gezeigt ist hier lediglich exemplarisch die starre Anbindung des Getriebegehäuses 12 an das Lagergehäuse 120. Das Planetengetriebe 10 umfasst das Getriebegehäuse 12, in dem zwei Planetenstufen 14 um eine Drehachse A_{D} umlaufen. Jede Planetenstufe 14 weist einen Planetenträger 16 und ein Hohlrad 20 auf. Der Planetenträger 16 ist mittelbar mit dem Rotor 106 antriebsverbunden, wobei der Planetenträger 16 mehrere mit dem Planetenträger 16 umlaufend und wechselseitig mit dem Hohlrad 20 und einem Sonnenrad 22 in einem Verzahnungseingriff stehende Planetenrädern 18 aufweist. Das Sonnenrad 22 der ersten Planetenstufen ist wiederum antriebsverbunden mit einem Planetenträger 16 der zweiten Planetenstufe, was vorliegend keiner weiteren Beschreibung bedarf.

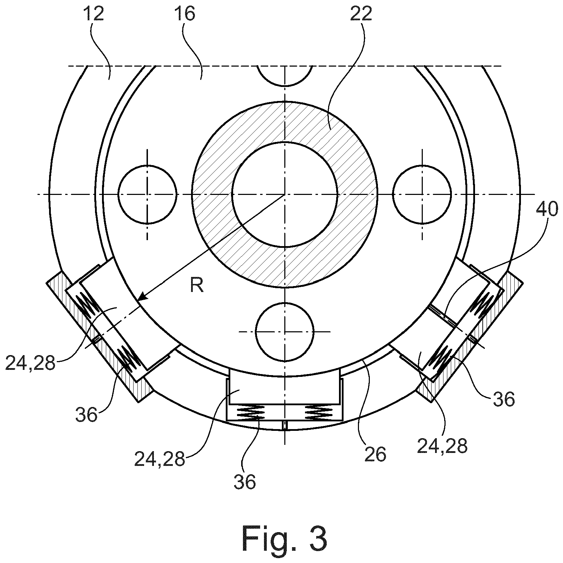

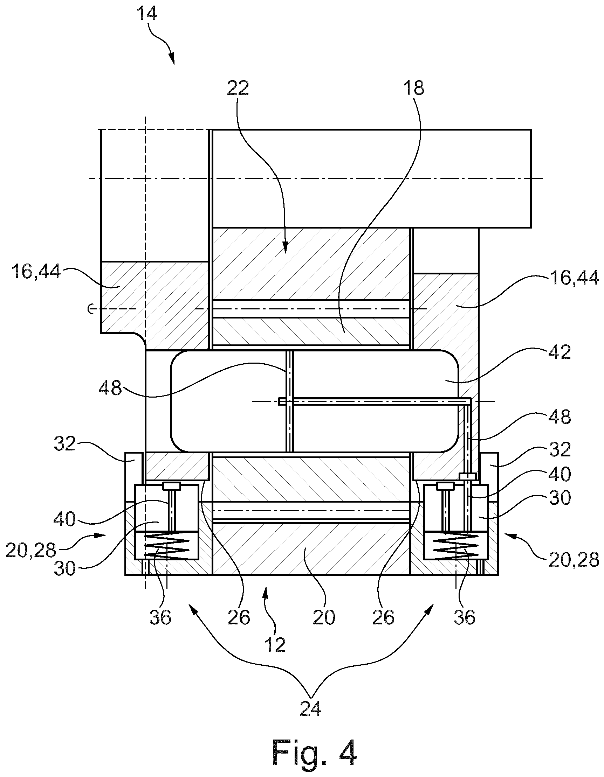

Anhand der Figuren 3 und 4 werden Führungselemente 24 beschrieben, wobei eine Mehrzahl an Führungselementen 24 vorgesehen sind, die umfänglich bezogen auf die Drehachse A_{D} angeordnet sind und die jeweils wechselseitig in einer Wirkverbindung mit dem Getriebegehäuse 12 und einem Umfangsbereich des Planetenträgers 16 stehen.

Die Figur 3 zeigt eine Axialansicht der ersten Planetenstufe 14, von der der Planetenträger 16 und das umgebende Getriebegehäuse 12 gezeigt sind. Es ist zudem ein erster Funktionstyp der Führungselemente 24 gezeigt, wobei vorliegend drei dieser Führungselemente 24 in einem Bereich des unteren Halbumfangs des Planetenträgers 16 angeordnet sind. Die Führungselemente 24 sind vorliegend drehfest an dem Getriebegehäuse 12 gehalten. Zudem sind die Führungselemente 24 in einem Umfangsbereich 26 des Planetenträgers 24 angeordnet, der sich in einem äußeren Drittel eines Radius R des Planetenträgers 16 befindet. Die Führungselemente 24 sitzen in radialer Richtung vorgespannt zwischen dem Getriebegehäuse 12 und dem Planetenträger 16 ein. Zum Bewirken der radialen Vorspannung der Führungselemente 24 können Federelemente 36 vorgesehen sein. Die Führungselemente 24 liegen gleitend auf einer Umfangsfläche 38 des Planetenträgers 16 auf. Bei einem der Führungselemente ist ein Ölkanal 40 vorgesehen, wie noch anhand nachfolgender Figuren erläutert wird. Die Führungselemente 24 des ersten Funktionstyps kompensieren zumindest weitestgehend die Gewichtskraft des Planetenträgers 16 und die in diesem einsitzenden Planetenräder 18 und Sonnenrad 22.

Die Figur 4 zeigt eine Detaillierung der ersten Planetenstufe 14 im Bereich einer der Führungselemente 14. Gezeigt ist ein Querschnitt durch ein Planetenrad 18, das auf einer Planetenachse 42 drehbar zwischen Seitenwangen 44 des Planetenträgers 16 einsitzt. Die Führungselemente 24 führen den Planetenträger 16 gegenüber dem Getriebegehäuse 12 in axialer und in radialer Richtung. Die Führungselemente 24 sind jeweils mehrteilig aufgebaut, wobei jeweils eine Führungsbacke 28 auf jeder axialen Seite des Planetenträgers 16 angeordnet ist. Zu erkennen ist, dass das Führungselement 24 den Planetenträger 16 an seinen beiden axialen Seite in radialer Richtung umgreift. Die Führungsbacken 28 sind vorliegend zweiteilig aufgebaut, wobei ein erstes Backenteil 30 eine Außenumfangsfläche 28 des Planetenträger 16 und ein zweites Backenteil 32 eine axiale Seitenfläche des Planetenträgers 16 zur jeweiligen Führung beaufschlagt. In jedem der ersten Backenteile 30 verläuft ein Ölkanal 40, der radial verlaufen kann und im Bereich der Kontaktpaarung Außenumfangfläche 28 des Planetenträgers 16 und der Innenfläche des ersten Backenteils 30 mündet, um diese Kontaktpaarung mit Schmierstoff zu versorgen.

Wie vorliegend zu erkennen, kann vorgesehen sein, dass das in einem der beiden ersten Backenteile 30 ein zweiter Ölkanal 48 verläuft. Zusätzlich verläuft in dem Planetenträger 16 und in der Planetenachse 42 ein weiterer Ölkanal 50, der mit dem zweiten Ölkanal 48 kommuniziert und der an einem Außenumfang der Planetenachse 42 mündet und hierdurch die Lagerung des Planetenrades 18 auf der Planetenachse 42 mit Schmiermittel versorgt.

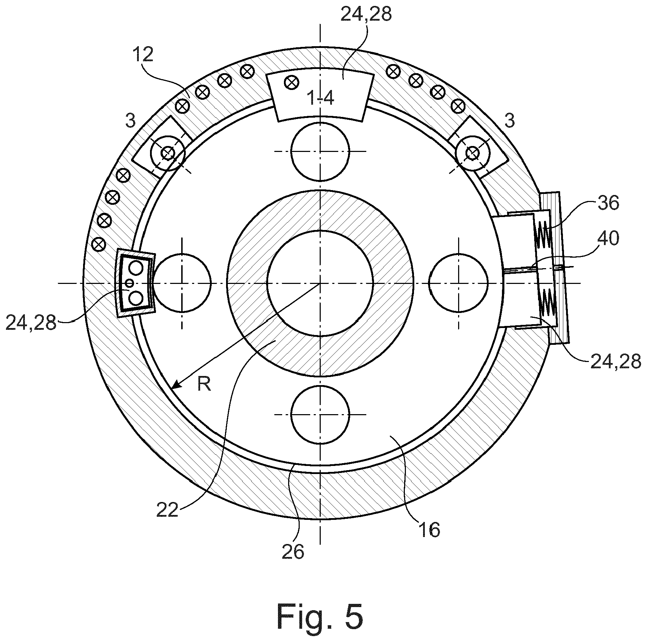

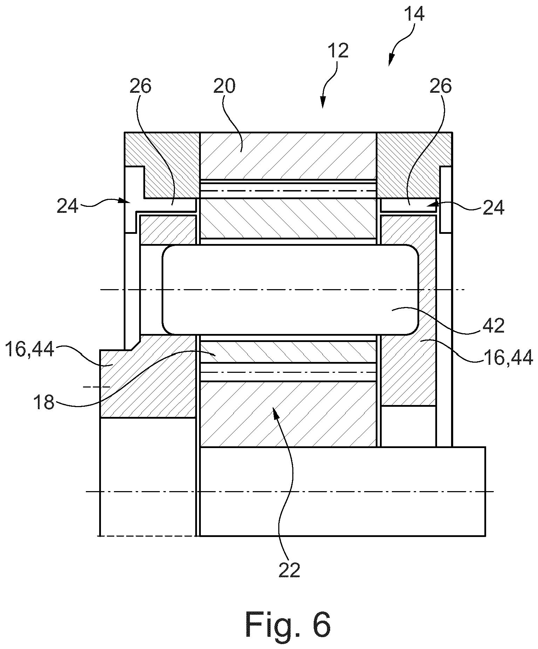

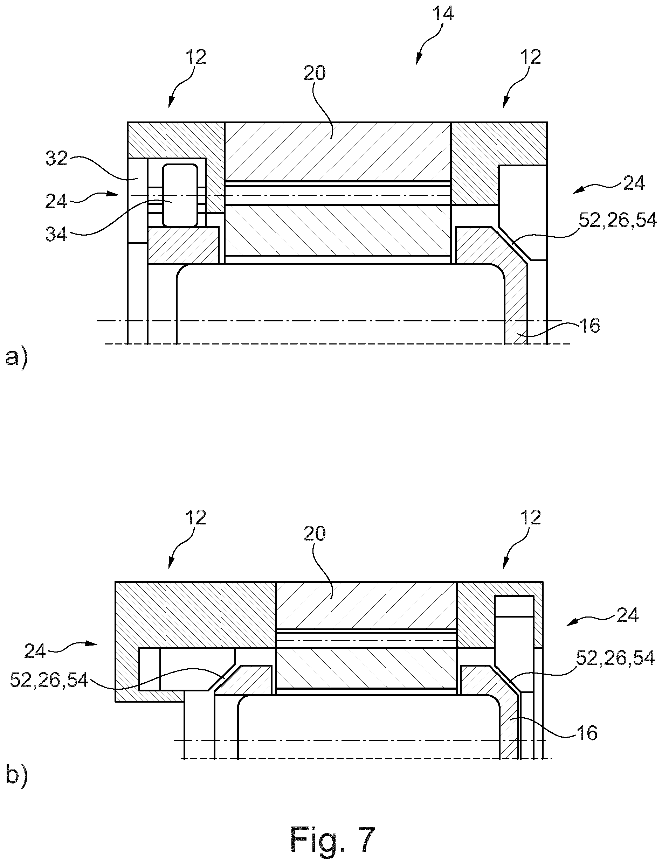

Die Figur 5 zeigt ebenfalls eine Axialansicht der ersten Planetenstufe 14, von der der Planetenträger 16 und das umgebende Getriebegehäuse 12 gezeigt sind. Es ist zudem der zweite Funktionstyp der Führungselemente 24 gezeigt, wobei vorliegend drei dieser Führungselemente 24 in einem Bereich des oberen Halbumfangs des Planetenträgers 16 angeordnet sind. Die Ausgestaltung des rechts gezeigten Führungselements 24 entspricht den Führungselementen 24, die zu der Figur 4 beschrieben wurden; abgesehen von der Positionierung. Die Ausgestaltung der Führungselemente 24, die in der Figur 5 oben und links dargestellt sind, sind Alternativen und werden im Detail noch anhand der Figuren 6, 7a) und 7b) beschrieben. Auch bei dem zweiten Funktionstyp sind die Führungselemente 24 drehfest an dem Getriebegehäuse 12 gehalten und in einem Umfangsbereich 26 des Planetenträgers 24 angeordnet, der sich in einem äußeren Drittel eines Radius R des Planetenträgers 16 befindet. Die Führungselemente 24 liegen gleitend auf einer Umfangsfläche 38 des Planetenträgers 16 auf. Durch den zweiten Funktionstyp der Führungselemente 24 wird die Selbstzentrierung der verzahnten Elemente, also der Planetenräder 18 und des Sonnenrades 22, innerhalb der Planetenstufe 14 gezielt zugelassen. Über die Führungselement 24 werden dem Planetenträger 16 einstellbare Bewegungsgrenzen in radialer Richtung vorgegeben.

Die Figuren 6, 7a) und 7b) zeigen jeweilige Detaillierungen der ersten Planetenstufe 14 im Bereich der Führungselemente 24. Die Führungselemente sind in verschiedenen alternativen Ausgestaltungen gezeigt. Die Figur 6 zeigt wiederum die erste Planetenstufe 14 im Bereich einer der Führungselemente 14. Gezeigt ist ein Querschnitt durch ein Planetenrad 18, das auf einer Planetenachse 42 drehbar zwischen Seitenwangen 44 des Planetenträgers 16 einsitzt. Es sind zwei alternative Ausgestaltung des Führungselements 24 dargestellt. Während das zwischen dem Getriebegehäuse 12 und dem Planetenträger 16 links dargestellte Führungselement 24 einteilig ausgeführt ist, ist das zwischen dem Getriebegehäuse 12 und dem Planetenträger 16 recht dargestellte Führungselement 24 zweiteilig ausgeführt. Beide alternative Ausgestaltungen des Führungselements 24 sind in geeigneter Weise mit dem Getriebegehäuse 12, welches in diesem Bereich als Stützstruktur des Hohlrades 20 ausgeführt ist, verschraubt und führen den Planetenträger sowohl in radialer als auch in axialer Richtung.

In der Figur 7a) ist links eine Ausgestaltung des Führungselements 24 gezeigt, dass eine wiederum zweiteilig ausgeführt ist und eine Führungsrolle 34 für die radiale Führung des Planetenträgers 16 umfasst. Die axiale Führung des Planetenträgers 16 übernimmt, wie bei den Alternativen der Figuren 4 und 6, eine zweites Backenteil 32. Die in den Figuren 7a) links und 7b) gezeigten Alternativen des Führungselements 24 sind strukturell vergleichbar ausgestaltet, indem sie nämlich mit einer keilförmigen Anschrägung 52 versehen sind und mit einer komplementär ausgeführten Gegenfläche 54 des Planetenträgers 16 in Wechselwirkung stehen. Über die Paarung aus Anschrägung 52 und Gegenfläche 54 wird eine axiale und gleichzeitig eine radiale Führung des Planetenträgers 16 gegenüber dem Getriebegehäuse 12 realisiert.

### Bezugszeichenliste

- 10: Planetengetriebe
- 12: Getriebegehäuse
- 14: Planetenstufe
- 16: Planetenträger
- 18: Planetenrad
- 20: Hohlrad
- 22: Sonnenrad
- 24: Führungselement
- 26: Umfangsbereich
- 28: Führungsbacke
- 30: erstes Backenteil
- 32: zweites Backenteil
- 34: Führungsrolle
- 36: Federelement
- 38: Umfangsfläche
- 40: Ölkanal
- 42: Planetenachse
- 44: Seitenwangen
- 46: Seitenfläche
- 48: Ölkanal
- 50: Ölkanal
- 52: Anschrägung
- 54: Gegenfläche
- 100: Windkraftanlage
- 102: Antriebstrang
- 104: Rotorflansch
- 106: Mehrblattrotor
- 108: Hauptlagereinheit
- 110: Getriebe
- 112: Generator
- 114: Maschinenträger
- 116: Turm
- 118: Hauptwelle
- 120: Lagergehäuse
- 122: Kupplung
- 124: Generatorwelle

## Patentansprüche

1. Planetengetriebe (10) für eine über einen Rotor (106) angetriebene Windkraftanlage (100) mit zumindest einer in einem Getriebegehäuse (12) um eine Drehachse A_{D} umlaufenden Planetenstufe (14), wobei die zumindest eine Planetenstufe (14) einen Planetenträger (16) und ein Hohlrad (20) aufweist und der Planetenträger (16) oder das Hohlrad zumindest mittelbar mit dem Rotor (72) antriebsverbunden ist und wobei der Planetenträger (16) mehrere mir dem Planetenträger (16) umlaufend und wechselseitig mit dem Hohlrad (20) und einem Sonnenrad (22) in einem Verzahnungseingriff stehende Planetenrädern (18) aufweist und wobei eine Mehrzahl an Führungselementen (24) vorgesehen sind, die umfänglich bezogen auf die Drehachse A_{D} angeordnet sind und die jeweils wechselseitig in einer Wirkverbindung mit dem Getriebegehäuse (12) und einem Umfangsbereich (26) des Planetenträgers (16) steht.

2. Planetengetriebe (10) nach Anspruch 1, **dadurch gekennzeichnet, dass** der mit den Führungselementen (24) in Wechselwirkung stehende Umfangsbereich (26) in einem äußeren Drittel eines Radius des Planetenträgers (16) angeordnet ist.

3. Planetengetriebe (10) nach Anspruch 1 oder 2, **dadurch gekennzeichnet, dass** zumindest drei über den Umfang verteilte Führungselemente (24) vorgesehen sind.

4. Planetengetriebe (10) nach einem der Ansprüche 1 bis 3, **dadurch gekennzeichnet, dass** zwei der Führungselemente (24) in einem Bereich des unteren Halbumfangs des Planetenträgers (16) angeordnet sind.

5. Planetengetriebe (10) nach einem der Ansprüche 1 bis 4, **dadurch gekennzeichnet, dass** die Führungselemente (24) den Planetenträger (16) gegenüber dem Getriebegehäuse (12) in axialer und in radialer Richtung führen.

6. Planetengetriebe (10) nach einem der Ansprüche 1 bis 5, **dadurch gekennzeichnet, dass** zumindest eines der Führungselemente (24) den Planetenträger (16) an einer axialen Seite, bevorzugt an beiden axialen Seiten, in radialer Richtung umgreift.

7. Planetengetriebe (10) nach einem der Ansprüche 1 bis 6, **dadurch gekennzeichnet, dass** die Führungselemente (24) jeweils mehrteilig aufgebaut sind, wobei jeweils eine Führungsbacke (28) auf jeder axialen Seite des Planetenträgers (16) angeordnet ist.

8. Planetengetriebe (10) nach Anspruch 7, **dadurch gekennzeichnet, dass** die Führungsbacken (28) mehrteilig, bevorzugt zweiteilig, aufgebaut sind, wobei ein erstes Backenteil (30) eine Außenumfangsfläche des Planetenträger (16) und ein zweites Backenteil (32) eine axiale Seitenfläche des Planetenträgers (16) zur jeweiligen Führung beaufschlagt.

9. Planetengetriebe (10) nach Anspruch 8, **dadurch gekennzeichnet, dass** das erste Backenteil (30) eine drehbar gelagerte Führungsrolle (34) umfasst.

10. Planetengetriebe (10) nach Anspruch 8 oder 9, **dadurch gekennzeichnet, dass** das erste Backenteil (30) zumindest einen im Wesentlichen radial verlaufenden Ölkanal (40) ausbildet.

11. Planetengetriebe (10) nach einem der Ansprüche 1 bis 10, **dadurch gekennzeichnet, dass** zumindest eines der Führungselemente (24) in radialer Richtung vorgespannt zwischen dem Getriebegehäuse (12) und dem Planetenträger (16) einsitzt.

12. Antriebsstrang (102) für eine Windkraftanlage (100) zur drehmomentübertragenden Verbindung eines Rotors (106) mit einem Generator (112), umfassend eine Hauptlagereinheit (108) mit einem Lagergehäuse (120) und einer Hauptwelle (118) und ein über die Hauptwelle (118) angetriebenes Getriebe (110), wobei das Getriebe (110) den Generator zumindest mittelbar antreibt, **dadurch gekennzeichnet, dass** das Getriebe als Planetengetriebe nach einem der vorangegangenen Ansprüche ausgebildet ist.

13. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach Anspruch 12 ausgebildet ist.

14. Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher in einem Planetengetriebe (10) nach einem der Ansprüche 1 bis 11 vorgesehenen Bestandteile, wobei die Datenpakete dazu hergerichtet sind bei einer Verarbeitung durch eine Datenverarbeitungseinrichtung eine additive Herstellung der Bestandteile des Planetengetriebes (10), insbesondere durch 3D-Druck mittels eines 3D-Druckers, und/oder eine Simulation der Funktionsweise des Planetengetriebes (10) durchzuführen.
